# EUROPEAN PATENT APPLICATION

(11) **EP 3 486 993 A1**
(43) Date of publication of application: **22.05.2019**
(21) Application number: 18213226.6
(22) Date of filing: 15.07.2014
(51) Int. Cl.: H01M 10/54, C22B 7/00

(54) **RECYCLING METHOD**

(62) Divisional of application: 14177082.6
(71) Applicant: Lars Walch GmbH & Co. KG, 91460 Baudenbach (DE)
(72) Inventor: WALCH, Matthias, 91460 Baudenbach (DE); WALCH, Kevin, 91460 Baudenbach (DE)
(74) Representative: Hartz, Nikolai

(57) **Abstract**

The present invention provides a method of recycling cathode material of a lithium ion battery, which comprises:
(i) providing a lithium ion battery cathode comprising a metal foil coated with the cathode material;
(ii) grinding the cathode in an impact grinder for providing a particulate cathode comprising metal foil particles having an average particle size of at least 200 µm and cathode material particles having an average particle size of less than 200 µm;
(iii) filtering the particulate cathode from the impact grinder in a dust collector;
(iv) separating the cathode material particles from the particulate cathode for providing recycled cathode material.

## Description

### Field of the Invention

The present invention relates to a method of recycling lithium ion battery cathode material. Furthermore, the present invention relates to a recycled lithium ion battery cathode material obtainable or obtained by the method according to the present invention. Finally, the present invention relates to the use of the recycled cathode material of the present invention for the manufacture of a lithium ion battery.

### Background of the Invention

Lithium-ion batteries are known. Lithium-ion batteries are rechargeable batteries in which lithium ions move from the negative electrode to the positive electrode (cathode) during discharge and in the reverse direction when charging. Primary functional components of the lithium-ion batteries are an anode, a cathode, an electrolyte, and a separator.

Lithium-ion batteries use an intercalated lithium compound as cathode material. The cathode (positive) electrode commonly contains cathode material and binder, which are coated on a metal foil such as an aluminum foil. The cathode material is generally one of the following materials: a layered oxide such as lithium cobalt or nickel oxide, manganese oxide, a polyanion such as lithium iron phosphate, or a spinel such as lithium manganese oxide.

During production of the cathode material for a lithium-ion battery, waste cathodes are generated in the form of a cathode comprising a metal foil coated with the cathode material. Moreover, during recycling of lithium-ion batteries, cathodes may be reclaimed in the form of a cathode comprising a metal foil coated with the cathode material.

The cathode material represents a significant commercial value. Given the tremendous amounts of waste cathodes generated along with the increasing use of lithium-ion batteries, recycling of the cathode material is highly desirable.

However, recycling of cathode material from a cathode wherein the cathode material is coated on a metal foil, is problematic since the recycled cathode material shows deteriorated electrical conductivity properties as may be determined by cyclovoltammetry. Therefore, cathode materials obtained from conventional recycling processes provide lithium-ion batteries having reduced performance due to the recycled cathode material.

Moreover, the recycling process may generate heavy-metal containing cathode material dust which is problematic for toxicological reasons.

Moreover, given the tremendous amounts of waste cathodes generated along with the increasing use of lithium-ion batteries, any recycling process must be highly efficient and capable of processing large amounts of material.

WO2013023640 discloses a method for reclaiming active material of a galvanic cell that comprises an active material, a carrier for said active material, and a binder for binding the active material and the carrier. According to the method the cells are comminuted under inert gas or in a vacuum, such that solid cell fragments are at least also produced. Subsequently, the solid cell fragments are heated to a decomposition temperature for decomposing or evaporating the binder under inert gas or in a vacuum, so as to produce thermally treated cell fragments, and classifying these thermally treated cell fragments.

CN202585684 discloses a device for separating an anode material from aluminum foil of a lithium battery positive plate. The device comprises a plurality of recovery units, wherein each recovery unit comprises a shearing type crusher and a vibration screen which is arranged below a discharging port of the shearing type crusher. The discharging port of an object on the vibration screen of the previous recovery unit is connected with the feeding port of the shearing type crusher of the next recovery unit, so that the plurality of recovery units are connected in sequence. The device effectively separates the anode material from the aluminum foil through a physical method.

However, the process of CN202585684 requires three shearing type crushers and three vibration screens, which represent a significant capital investment. Moreover, the process of CN202585684 requires that the flow of material is tightly controlled in order to maintain an efficient overall sieving performance. Furthermore, the positioning of a vibration screen below a discharging port of the shearing type crusher gives rise to health concerns as the process generates large amounts of toxic dust. Finally, the recovery rate of the anode material of about 98% in three steps leaves further room for improvement.

### Summary of the Invention

It is a problem of the present invention to provide a method of recycling cathode material of a lithium ion battery which provides recycled cathode material from which a recycled cathode for a lithium ion battery may be prepared without further chemical or physical purification steps, which electrode has properties highly similar or identical to a cathode prepared from fresh starting materials, whereby the process is highly efficient so that large amounts of material may be processed and whereby the process does not give rise to health concerns due to the development of toxic dust.

Moreover, it is a problem of the present invention to provide recycled cathode material of a lithium ion battery which may be used without further modification in the preparation of a cathode of a lithium ion battery, which cathode has properties highly similar or identical to a cathode prepared from fresh starting materials.

Finally, it is the problem of the present invention to provide a use of the recycled cathode material of a lithium ion battery for the manufacture of a lithium ion battery.

According to a first aspect, the present invention provides a method of recycling cathode material of a lithium ion battery, which comprises:
(i) providing a cathode of a lithium ion battery, comprising a metal foil coated with the cathode material;
(ii) grinding the cathode in an impact grinder for providing a particulate cathode comprising metal foil particles having an average particle size of at least 200 µm and cathode material particles having an average particle size of less than 200 µm;
(iii) filtering the particulate cathode from the impact grinder in a dust collector;
(iv) separating the cathode material particles from the particulate cathode for providing recycled cathode material.

According to a second aspect, the present invention provides recycled lithium ion battery cathode material obtainable or obtained by the method according to the first aspect.

According to a third aspect, the present invention provides the use of the recycled cathode material according to the second aspect for the manufacture of a lithium ion battery.

The present invention is based on the recognition that conventional methods of recycling lithium ion battery cathode material, which employ a heat treatment step or wet chemical treatment steps significantly change the properties of the cathode material so that the recycled cathode material shows deteriorated electrical conductivity properties as may be determined by cyclovoltammetry.

Furthermore, the present invention is based on the recognition that the removal of binder is not required for maintaining electrical conductivity properties of recycled cathode material so that the electrical conductivity properties of recycled cathode material may be maintained at a high level despite the presence of binder in the recycled cathode material.

Moreover, the present invention is based on the recognition that it is possible to separate the cathode material from the metal foil such as an aluminum foil in a single step at a yield of at least 99 % by mechanical treatment of the cathode in an impact grinder whereby a particulate cathode may be obtained, which comprises metal foil particles and cathode material particles, which particles having significantly different average particle sizes so that the metal foil particles may be efficiently separated from the cathode material particles by sieving.

Finally, the present invention is based on the recognition that filtering particulate cathode material in a dust collector may be used to increase efficiency of the separation of the cathode material particles from the particulate cathode material while at the same increasing safety of the process by reducing the dusting problem.

### Brief Description of the Figures

Figure 1 shows a flow chart of an embodiment of the method of the present invention.
Figure 2 shows, in diagrammatic sectional view, equipment for performing the method of the present invention.

### Detailed Description of the Preferred Embodiments

The present invention provides a method of recycling lithium ion battery cathode material. The method of the present invention provides cathode material particles as recycled cathode material, which may be used as such for preparing a lithium ion battery cathode. The lithium ion battery cathode prepared by using the recycled cathode material is characterized by electrical conductivity properties as may be determined by cyclovoltammetry, which are closely similar or identical to the electrical conductivity properties of a lithium ion battery cathode prepared by using a fresh cathode material. The process may provide a yield of more than 99 % in a single grinding, filtering and sieving step. Preferably, the process provides a yield of more than 99.5 % in a single grinding, filtering and sieving step.

The method of the present invention comprises a step of providing a cathode of a lithium ion battery, comprising a metal foil coated with the cathode material. The cathode may be a cathode which has been recovered from a lithium ion battery. Alternatively, the cathode may be a cathode representing waste from the production of lithium ion battery cathode production. According to a preferred embodiment, the metal of the metal foil comprises aluminum. Preferably, the cathode material comprises LiCoO₂, LiMn₂O4, LiNiO₂, LiNi_{1/3}Mn_{1/3}Co_{1/3}O₂ and/or LiFePO₄. The cathode material further comprises a binder.

Furthermore, the method of the present invention comprises a step of grinding the cathode in an impact grinder for providing a particulate cathode comprising metal foil particles having an average particle size of at least 200 µm and cathode material particles having an average particle size of less than 200 µm.

According to a preferred embodiment, the impact grinder is a hammermill for crushing the aggregate material of the lithium ion battery cathode into smaller pieces. A hammermill comprises a housing which may be drum-shaped, containing a vertical or horizontal rotating shaft or drum on which hammers are mounted. The hammers are free to swing on the ends of the cross, or fixed to the central rotor. The rotor is spun at a high speed inside the housing while material is fed into a feed hopper. The material is impacted by the hammer bars and is thereby shredded and expelled through screens in the drum of a selected size. According to the present invention, by using an impact grinder the particle size differences between metal foil particles and cathode material particles may be increased so that the separation by sieving is more efficient.

Furthermore, the method of the present invention comprises a step of filtering the particulate cathode from the impact grinder in a dust collector. A dust collector system preferably comprises a blower, dust filter and a dust receptacle. A filter-cleaning system may also be provided. A preferred dust collector is a baghouse using long, cylindrical bags (or tubes) made of woven or felted fabric as a filter medium. The dust-laden air from the impact grinder enters the baghouse by using a blower and is directed into the baghouse compartment. The gas is drawn through the bags, either on the inside or the outside, and a layer of dust accumulates on the filter media surface until air can no longer move through it. When sufficient pressure drop occurs, the collection of the particulate cathode begins. Collection can take place while the baghouse is online (filtering) or is offline (in isolation).

Finally, the method of the present invention comprises a step of separating the cathode material particles from the particulate cathode for providing recycled cathode material. Preferably, cathode material particles are separated by sieving. For this purpose, the cathode material particles are fed to a first sieve for removal of particles having a particle size of at least 200 µm and a second sieve for removal of particles cathode material particles having an average particle size of less than 200 µm.

Furthermore, the present invention provides a particulate recycled cathode material of a lithium ion battery, obtainable or obtained by the method according to any one of the preceding claims.

Preferably, the particulate recycled cathode material has the following composition based on the total weight of the recycled cathode material and expressed as oxides:

| | |
|---|---|
| Co₃O₄ | 27 to 35 percent by weight; |
| MnO | 25 to 30 percent by weight; |
| NiO | 25 to 30 percent by weight; |
| Al₂O₃ | less than 4 percent by weight. |

Preferably, the particulate recycled cathode material contains Al₂O₃ in an amount of less than 3 percent by weight based on the total weight of the recycled cathode material and expressed as oxides

In the particulate recycled cathode material according to the present invention, the binder is preferably contained in an amount of from 0.001 to 5 percent by weight based on the total weight of the recycled cathode material. Preferably, the binder is contained in an amount of from 0.1 to 3 percent by weight based on the total weight of the recycled cathode material.

According to a preferred embodiment, the particulate recycled cathode material according to the present inventions contains less than 1 percent by weight of water based on the total weight of the recycled cathode material.

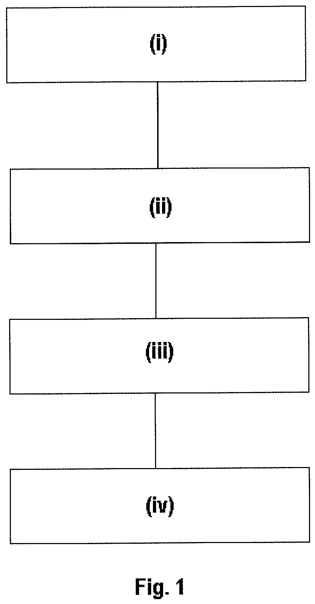

Figure 1 shows a flow chart of an embodiment of the method of recycling lithium ion battery cathode material of the present invention. Accordingly, in a first step (i) a lithium ion battery cathode comprising a metal foil coated with the cathode material is provided. The lithium ion battery cathode may be in the form of sheets. Preferably, the she sheets are comminuted to a uniform particle size. Preferably, the average particle size of the starting material is in the range of from 5 cm to 2 mm. Accordingly, the lithium ion battery cathode may be provided by cutting the sheets. According to a preferred embodiment, a shredder is used in order to provide a feed material for subsequent step (ii).

In a further step (ii), the lithium ion battery cathode is introduced into an impact grinder. The introduction may be batchwise or continuous. The impact grinder is preferably a hammermill. The lithium ion battery cathode is treated in the hammer mill in order to impact the cathode material coated on the metal foil. Due to the difference in mechanical properties of the cathode material and the metal foil, the impact treatment reduces the size of the cathode material more quickly as the size of the metal foil. Moreover, the impact treatment in may be adjusted so that the coated cathode material is removed from the metal foil. Accordingly, in a single impact treatment step it is possible to provide a bimodal particle size distribution of a particulate cathode wherein small particles consisting essentially of cathode material and binder and larger particles consisting essentially of metal foil particles are contained. According to the method of the invention, it is preferred to adjust the particle size distribution so that the small particle size fraction and the large particle size fractions essentially do not overlap. According to the present invention, metal foil particles are prepared which have an average particle size of at least 200 µm. Preferably, the average particle size is in the range of from 250 µm to 1000 µm. According to the present invention, cathode material particles are prepared which have an average particle size of less than 200 µm. Preferably, the average particle size is in the range of from 50 µm to 180 µm. Accordingly, it is possible to use sieving in order to efficiently separate the fractions and thereby the cathode material from the metal foil.

In a subsequent step (iii), the particulate cathode is removed from the impact grinder and filtered in a dust collector. The removal of the particulate cathode may be accomplished by a screen through which only particulate cathode material within a desired size range may pass for transfer to the dust collector. The particulate cathode material may be transferred to the dust collector by using a blower. Accordingly, it is possible to seal the recycling compartment from the environment so that dust cannot escape in to the environmental air. The particulate cathode material is collected in the dust filter. Accordingly, the dust filter represents a buffer in which particulate cathode accumulates. According to the present invention, the dust collector decouples the flow of material from the impact grinder to the separation device such as a sieve. Accordingly, the particulate cathode may be fed efficiently to the separation device without disturbing the grinding step.

The dust collector preferably uses filter bags which are made of a suitable material such as polyethylene. The material may be coated. A suitable coating is a polyurethane coating. The material is preferably felted.

In a subsequent step (iv), the filtered particulate material is transferred to a separation device for providing recycled cathode material.

The transfer may me facilitated by a rotary feeder.

The separation device is preferably a sieve. The sieve may be a vibrating sieve. The separation device may comprise one or more sieves. Preferably, the separation device comprises more than one sieve. Advantageously, a first sieve is provided for the removal of coarse particles. The sieve for the removal of coarse particles may have a sieve size of about 3 mm. Moreover, the separation device may comprise a second sieve for separating the cathode material particles from the particulate cathode. Accordingly, the second sieve may have a sieve size of about 0.2 mm. Accordingly, the desired recycled cathode material may be recovered as the particulate material which passed the second sieve. Further sieves may also be provided in order to further classify the particles.

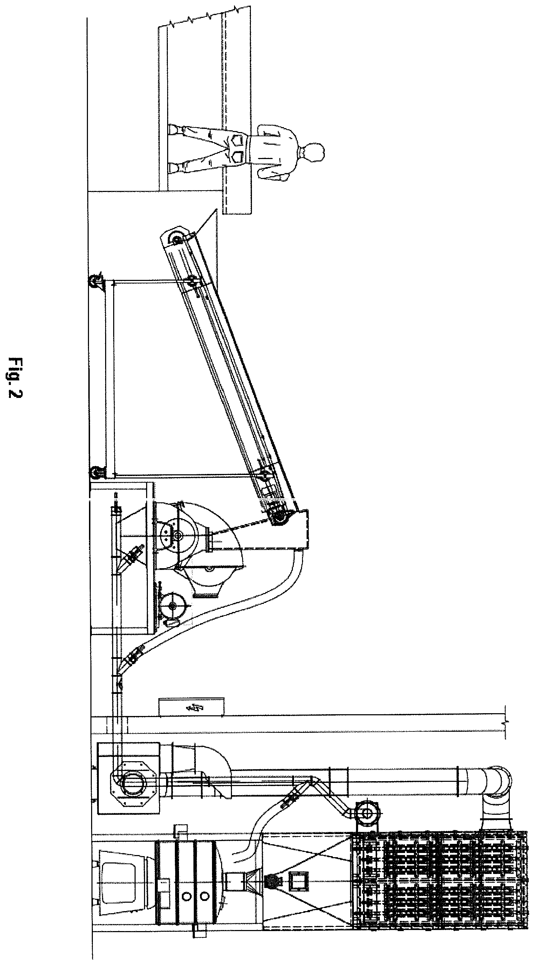

Figure 2 shows, in diagrammatic sectional view, equipment for performing the method of the present invention. Accordingly, a conveyor belt 2 is provided for feeding a lithium ion battery cathode into the feed hopper 3 of a hammermill 4. The outlet of the hammermill is in fluid flow connection through tubing 6 with a filter device 7. The filter device is in fluid flow connection with a vibration sieving device 10. Preferably, a rotary feeder (not shown) is used in order to feed material to the sieving device.

The performance of the particulate recycled cathode material of a lithium ion battery, obtainable or obtained by the method according to the present invention may be demnstrated by a comparison between fresh cathode material, a recycled cathode material of the invention and a recycled cathode material which was treated with a wet chemical treatment step. Accordingly, a coating composition may be prepared which comprises a 90 wt.% of particulate cathode material, 5 wt.% of a binder, 5 wt.% of carbon black and NMP as a solvent, and the coating composition may be coated on an aluminum foil for preparing a cathode. As a result, it may be shown that the cathode prepared from cathode material according to the present invention has conductivity properties almost identical to the conductivity properties of a cathode obtained from fresh cathode material. On the other hand, a cathode obtained based on cathode material obtained by a wet method shows high polarization indicative of inferior conductivity properties.

## Claims

1. A method of recycling lithium ion battery cathode material, which comprises:
(i) providing a lithium ion battery cathode comprising a metal foil coated with the cathode material;
(ii) grinding the cathode in an impact grinder for providing a particulate cathode comprising metal foil particles having an average particle size of at least 200 µm and cathode material particles having an average particle size of less than 200 µm;
(iii) filtering the particulate cathode from the impact grinder in a dust collector;
(iv) separating the cathode material particles from the particulate cathode for providing recycled cathode material.

2. The method according to claim 1, wherein the impact grinder is a hammermill.

3. The method according to claim 1 or 2, wherein the particles are collected by using a fabric collector.

4. The method according to any one of claims 1 to 3, wherein the cathode material particles are separated by sieving.

5. The method according to any one of claims 1 to 4, wherein a rotary feeder is used to feed particles to a sieving device.

6. The method according to any one of claims 1 to 5, wherein the metal of the metal foil comprises aluminum.

7. The method according to any one of claims 1 to 6, wherein the cathode material comprises LiCoO₂, LiMn₂O₄, LiNiO₂, LiNi_{1/3}Mn_{1/3}Co_{1/3}O₂ and/or LiFePO₄.

8. The method according to any one of claims 1 to 7, wherein the cathode material further comprises a binder.

9. Particulate recycled cathode material of a lithium ion battery, obtainable or obtained by the method according to any one of the preceding claims.

10. The particulate recycled cathode material according to claim 9, which has the following composition based on the total weight of the recycled cathode material and expressed as oxides:
| | |
|---|---|
| Co₃O₄ | 27 to 35 percent by weight; |
| MnO | 25 to 30 percent by weight; |
| NiO | 25 to 30 percent by weight; |
| Al₂O₃ | less than 4 percent by weight. |

11. The particulate recycled cathode material according to claim 9 or 10, which contains binder in an amount of from 0.001 to 5 percent by weight based on the total weight of the recycled cathode material.

12. The particulate recycled cathode material according to any one of claims 9 to 11, which contains less than 1 percent by weight of water based on the total weight of the recycled cathode material.

13. Use of the particulate recycled cathode material as defined by any one of claims 8 to 12 for the manufacture of a lithium ion battery.

14. The use according to claim 13, wherein the lithium ion battery is an automotive lithium ion battery.
